(19) Europäisches Patentamt
European Patent Office
Office européen des brevets

(11) **EP 4 366 340 A1**

(12) **EUROPEAN PATENT APPLICATION**

(43) Date of publication:
**08.05.2024 Bulletin 2024/19**

(21) Application number: **22205083.3**

(22) Date of filing: **02.11.2022**

(51) International Patent Classification (IPC):
*H04W 4/40* $^{(2018.01)}$

(52) Cooperative Patent Classification (CPC):
**H04W 4/40; H04W 28/22**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Schiegg, Florian Alexander**
**31139 Hildesheim (DE)**
• **Llatser Marti, Ignacio**
**31135 Hildesheim (DE)**

(54) **METHOD FOR PROVIDING AN OBJECT MESSAGE AND MESSAGE GENERATION DEVICE**

(57) The invention relates to a method (100) for providing an object message (1010), comprising selected information about a surrounding region of a participant, in a communication network comprising the following steps:
• acquiring the selected information about the surrounding region, comprising perceived objects and/ or perceived regions, whereby the selected information are segmented into at least a first message item and a second message item,
• Receiving or estimating a maximum data rate for transmitting the object message (1010),
• Determining an optimized data size and an optimized message generation period of the object message (1010),
• Providing the object message (1010) with the optimized message generation period and the optimized data size to be sent via the communication network.

The invention also relates to a message generation device, a participant comprising the message generation device, a computer program product and a computer-readable data carrier.

**Fig. 1**

EP 4 366 340 A1

## Description

State of the art

DE 10 2019 218 916 A1 discloses a method for transmitting a message via a communication network wherein message segments to be transmitted are filtered according to their priority values.

Core and advantages of the invention

Currently, traffic automation and vehicular communication are seen as the most promising technologies to mitigate the negative effects of rising traffic densities. Different V2X (=Vehicle to Anything) communication links are being developed: Vehicle to Vehicle (V2V), Vehicle to Infrastructure (V2I), Infrastructure to Vehicle (I2V), Vehicle to Vulnerable Road User (V2VRU), Vehicle to Network (V2N) and/or Network to Vehicle (N2V).

Collective perception is a concept of sharing the perceived environment of a station based on perception sensors. In other words, it is a concept of actively exchanging locally perceived objects between different participants, especially vehicle or roadside ITS-Ss equipped with sensors such as, for example, video cameras, radar, or LIDAR sensors, by means of object messages, especially Collective Perception Messages (CPMs) or Sensor Data Sharing Messages (SDSMs), using V2X communication technology. Collective perception aims at sharing information about the current driving environment between connected stations, such as for example Intelligent Transport Systems-Stations (ITS-S) in ITS sub systems. This comprises the definition of the syntax and semantics of the object message and detailed specification of the data and message handling to increase the awareness of the environment in a cooperative manner.

The European Telecommunications Standards Institute (ETSI) is currently proposing a service for collective perception for standardization in the EU. The collective perception is based on object messages about the instantaneous surroundings of the road user being sent to other connected stations, such as for example other vehicles, pedestrians, or infrastructure elements, via V2X communication, or being received from the connected stations, as described, for example, in ETSI TR 103 562, Intelligent Transport System (ITS); Vehicular Communications; Basic Set of Applications; Analysis of the Collective Perception Service (CPS). Similar V2X services have been / are being standardized in other regions of the world.

Systems on the infrastructure side can support vehicles in their driving tasks by providing additional information, e.g., sensors on the roadside or data servers, which the on-board sensors of the vehicle cannot generate themselves or can generate only to a limited extent. This infrastructure-generated additional information can be a list of perceived objects which can be transmitted to the vehicles or other road users using a so-called object message. The object message offers Intelligent Transport Systems-Stations (ITS-S) the possibility to share information about objects in the surroundings, which have been detected by sensors (f. ex radar, LIDAR, cameras, etc.) or other information sources of the transmitting road user. The object message may comprise information about the disseminating ITS-S itself, its sensory capabilities, and its detected/ perceived objects. For this purpose, the object message may provide generic data elements to describe detected objects in the reference frame of the disseminating ITS-S.

Vehicles and infrastructure exchange objects detected by sensors with nearby vehicles. Each vehicle may receive sensor based lists of perceived objects from other participants. Therefore, redundancy for sensor fusion increases. This allows for a higher reliability of the applications, such as (partially) automated driving, using the received information of the object messages, comprising the perceived objects.

The invention described hereafter is particularly relevant for object messages of infrastructure systems, but also applicable to other stations and other object messages, especially V2X-messages.

The invention comprises a method for generation period and content management of an object message.

The present invention relates to a method for providing an object message, a message generation device, a participant, comprising the message generation device, a computer program product and a computer-readable data carrier.

Advantages of the concept of perception services, such as CPS, providing object messages, comprise reducing the surroundings uncertainty of the participant with respect to its respective current surroundings in that a higher number of objects may be perceived, and the quality of the perceived/ recognized object data may be improved. The perception service defines the object message which allows for sharing of information about detected objects by the disseminating ITS-S. The object message is transmitted cyclically with adaptive message generation rates to decrease the resulting channel load while focusing on reporting changes in the dynamic road environment.

An advantage of the invention comprising the features of the independent claims is that it enables enhanced use of the resources of the communication network and that it provides reliable information about a surrounding region of a participant, f. ex. a road user, a vehicle ITS-S, a roadside ITS-S, etc..

This is achieved by a method for providing an object message according to claim 1, comprising selected information about a surrounding region of a participant, in a communication network. Especially the participant is a transmitting participant that provides the object message for other participants. The method comprises the following steps:

- acquiring the selected information about the surrounding region, comprising perceived objects and/or perceived regions, whereby the selected information are segmented into at least a first message item and a second message item,
- Receiving a maximum data rate for transmitting the object message from a communication management entity or estimating the maximum data rate for transmitting the object message,
- Determining an optimized data size and an optimized message generation period of the object message by carrying out the following steps:

  ▪ Determining a first relevancy weight for the first message item, depending on a content of the first message item and determining a second relevancy weight for the second message item, depending on a content of the second message item,
  ▪ Defining an optimization function, at least depending on

    ∘ the first relevancy weight and a generation period of the first message item, and
    ∘ the second relevancy weight and a generation period of the second message item,

  ▪ Optimizing the optimization function taking into account that the optimized data size divided by the optimized message generation period is less than or equal to the maximum data rate, to determine the optimized message generation period and optimized data size of the object message,

- Providing the object message with the optimized message generation period and the optimized data size to be sent via the communication network.

The reciprocal value of the generation period is referred to as frequency.

The surrounding region of the participant is an environment of the participant which may comprise free space areas and/ or objects, such as, for example infrastructure elements, pedestrians, other vehicles or ITS-Ss, bicycles, etc.. The surrounding region of the participant is an area which at least partially surrounds the participant. Especially the surrounding region describes an area in which the participant is operating, such as, for example, staying, moving, driving, etc..

"The selected information about the surrounding region" may be understood in that way that these information comprise all available information about the surrounding region of the participant or at least information about the surrounding region selected for transmission. An object from a list of perceived objects of the participant with sufficient confidence level and not subject to redundancy mitigation techniques may be selected for transmission because of the current object message generation event. The selection for transmission may comprise further criteria, such as, for example, confidence of the object information, an object class, time of perception, etc..

Objects selected for transmission may be included in an object message in a descending order of a per object utility function defined as the sum of the following parameters:

- $p_{conf}$ (function of the object existence confidence),
- $p_{pos/speed/head}$ (function of the object's state variation since the last inclusion in an object message (position, speed, heading)),
- $p_{time}$ (function of the time elapsed since the last time the object was included in an object message).

Furthermore, perceived regions, such as for example, free space regions, especially 2D or 2D+ regions or regions with a free space confidence different from the default value, may be selected for transmission because of the current object message generation event.

Each object message comprises at least one message item, especially one message item or especially two or more message items. The message items have different expected values for the vehicular network, represented by their relevancy weights, in other words, represented by their value of information. Each object message includes protocol headers that do not carry information concerning the traffic environment, but still consume channel resources.

The message items may comprise detected objects, sensor specifications, detected (perceived) regions, etc.. For example, a message item comprises at least one perceived object and/or perceived region. The message items have different expected values for the vehicular network, represented by their relevancy weights.

A payload of the object message comprising the selected information may be provided by a perception service, for example. The payload is the part of the data selected for transmission that is the actual intended message. Headers and metadata are sent only to enable payload delivery. The payload is segmented into the message items.

The perception service may be an application support facility provided by the facilities layer that constructs, manages and processes object messages distributed from infrastructure to end-users or vice-versa based on payload received from the application. The perception services may support infrastructure-based applications in order to achieve communication interoperability, and may be implemented in parallel to other services in an ITS-S. The perception service merges a header with the payload, in order to construct the object message. The object message/ the object message segments are then delivered to the other participant via the communication network.

The payload may be generated by ITS applications and/ or the perception service in the transmitting participant or other connected ITS-S. At the transmitting participant, the transmission of the object message may be triggered by applications, by the perception service itself or by forwarding mechanisms. For this purpose, the applications may connect to other entities of the facilities layer or to external entities, in order to collect relevant information for the generation of the payload, in other words for acquiring the selected information about the surrounding region of the participant. Once the object message or object message segments are generated for example by segmentation, determining generation period and data size of the object message (segments), providing the object message (segments) etc., the perception service may repeat the transmission, until the application requests the termination of the transmission, or triggers another request to generate updated object messages.

At the receiving participant, the received object messages are processed by the perception services and the information of the object message are delivered to applications or to other facility layer entities. In one typical application, the object message is transmitted by a roadside unit and then the object message is disseminated to a vehicle within a target destination area, in which the information included in the object message is considered as relevant to traffic participants.

The communication network, especially a vehicular communication network, comprises a network for traffic linking, for example a V2X communication mechanism. The transmittable object messages or transmittable object message segments may be transmitted via a communication link, especially a wireless communication link, such as, for example, a WLAN, Bluetooth, or cellular communication link, between users of the communication network. The participant is connected to other participants via the communication network. The communication network may comprise at least one channel. It may also comprise more than one channel, especially two or more channels.

The participant can be equipped with sensors (f. ex radar, LIDAR, cameras, etc.), especially stationary sensors. The participant can obtain information about its surrounding region, such as object information, from these sensors. These information can be transmitted (f. ex. via the collective perception service) to other ITS-Ss.

The participant can also receive object messages or object message segments, especially CPMs and/ or cooperative awareness messages (CAMs) and forward these object messages or object message segments to other ITS-Ss. Additionally or alternatively the participant may aggregate the information from received messages/ message segments in a new object message.

The participant may, for example, be understood to mean an Intelligent Transport Systems-Station (ITS-S), a road user such as a (motor) vehicle (such as a car, a truck, a bus, etc.), a bicycle, vulnerable road user (e.g., a pedestrian), a roadside unit, Multi-connectivity Edge Computing (MEC), mobile network (cellular network) etc.. Roadside units are equipped with stationary sensors and they may obtain object information from mounted stationary sensors and broadcast detected objects via the object message to surrounding ITS-S.

The participant may receive and transmit information. In other words, the participant may acquire information for providing an object message for providing information about its surrounding region for other (receiving) participants, but the participant may also receive object messages or object message segments from other (transmitting) participants when acquiring information and for generating its surroundings model using the information of the surroundings of the other participants.

For example, the step acquiring selected information may comprise further steps:

- Receiving all available information about the surrounding region,
- Selecting information from all available information about the surrounding region for transmission.
- Alternatively, all available information may be selected for transmission. All available information correspond to the selected information about the surrounding region, then.

For example, the step acquiring information about the surrounding region may comprise a step providing a list of perceived objects. This step can be carried out by an object fusion system, for example. Sensors mounted to the participant are providing raw sensor data as a result of their measurements which may be used by a sensor specific object fusion system to provide a list of perceived objects as detected by the measurement of the sensors. The measured sensor data (raw sensor data) is specific to a sensor type (e.g., reflexions, time of flight, point clouds, camera image, etc.). In the context of perception of a surrounding region, this data is usually evaluated by sensor-specific analysis processes to detect and compute a mathematical representation for a perceived object. The object fusion system may provide and maintain a list of perceived objects that are currently perceived by the participant. The object fusion mechanism may

- predict each object at times at which no measurement is available from the sensors.
- associate objects from other potential sensors mounted to the participant or received from other participants with objects in the tracking list; and
- merge the prediction and an updated measurement for an object.

Therefore, at each point in time, the object fusion system can provide an updated list of perceived objects.

Further information from other participants (such as f. ex. CPMs or CAMs) may additionally be fused with the locally perceived information. In other words, the selected information about the surrounding region may comprise information obtained from various sources, such as f. ex. information of a sensor system of the participant, information or object messages received from other ITS, etc..

The object fusion system may add new objects to the list of recognized objects and it may update objects that are already tracked by the object fusion system. Besides the object fusion system may remove objects from the list of perceived objects if new measurements cannot be associated to already tracked objects.

Object fusion may be performed either by an individual sensor, or by a high-level data fusion process.

The object fusion system may also classify perceived objects.

If no objects are detected or selected for transmission, the list of perceived objects may be an empty list and the participant may still generate an object message periodically to report that it is able to detect and share objects.

Perceived objects may be other participants, vehicles, ITS, pedestrians, infrastructure elements, etc.. The perceived objects may be relevant for traffic safety, especially they may either be static, i.e., do not move but are located on the driving lanes, or dynamic, i.e., move or have the ability to move.

The communication management entity, such as for example a communication management service or a multi-channel operation facility, provides the maximum data rate for transmitting the object message. In other words, the communication management entity provides information about the maximum number of bits (upper bound of bits) which are transmittable per unit of time. Additionally or alternatively, the maximum data size may be estimated using message statistics. For example, the maximum data size may be chosen as the maximum size of all received messages in a given time period. It may further correspond to a certain threshold, e.g., a two sigma interval considering the received messages or the expected transmitted messages.

The associated "maximum data size" may, f. ex., may depend on the maximum transmission unit. Especially, the maximum data size is less than or equal to the maximum transmission unit of the access layer technology over which the object message should be transported. There is another constraint that the maximum data size should fulfil: maximum data size divided by object message rate is less or equal to the maximum data rate provided by the communication management entity or provided by the estimating step. Especially, the communication management entity enables a predictable access to the communication network.

The object message may be composed of a header and at least a management container, especially comprising information about the participant, comprising information about at least one of the following: the at least one sensor of the disseminating participant, generation time, station type, reference position (f. ex. three-dimensional coordinates), etc.

Besides the object message may comprise additional containers, such as, for example:

- Station data container, comprising an originating Vehicle Container or an originating Roadside Unit (RSU) Container, especially comprising dynamic information of the disseminating participant (vehicle) such as, for example heading, orientation angle, speed, acceleration, yaw rate, etc.
- Sensor information container, comprising sensor information such as, for example, description of perception capabilities of transmitting participant, differentiation between RSU and vehicle and possibly an abstract description of the sensor range (f. ex. circular, polygon, rectangle, ellipse; sensor range orientation, sensor minor/major range length, node coordinates, etc.)
- Perceived object container, comprising perceived (recognized) objects, especially a list of perceived objects, providing timing, position and attitude information for detected objects, 3D representation of objects relative to the disseminating participant, along with a corresponding correlation matrix and/or Free space addendum container or perceived region specification container may comprise an indication of free space confidence and if shadowing shall apply within corresponding perceived region. Besides, the free space addendum (perceived region specification) container may be added if free space derived by the receiver from the sensor specifications of the disseminating participant would be inaccurate.

The method comprises an object message generation frequency and content management: Different generation rules for the object message generation apply to each container type. Exemplary generation rules may be at least some of the following:

- The originating vehicle container is included in every object message
- The sensor information container is included with a frequency of 1 Hz
- The frequency set for the perceived object container and perceived region specification container is between 1 and 20 Hz depending on the load of the communication channel.

Detected (perceived) objects, in other words message items, comprising the perceived objects, are added to the object message according to inclusion criteria such as, for example, a dynamic state of the object (speed, acceleration, etc.), an object measurement confidence level, an object redundancy, an object type (e.g., vulnerable road users (VRU)) and/or a current knowledge of the V2X network about the perceived object.

Detected (perceived) regions, in other words message items, comprising the perceived regions, may be added to the object message according to inclusion criteria such as, for example, the dynamic state of the region (speed, acceleration, etc.), a region free space confidence level, the region size, the region's location with respect to surrounding traffic participants, a region redundancy and/or a current knowledge of the V2X network about the perceived region.

Based on the object inclusion rules at least a subset of the perceived objects are selected for transmission. The capacity of the communication channel provided by the communication management entity defines how many of these objects are finally selected for transmission, then. Objects better known to the potential receivers may be omitted as they are regarded as redundant.

The object message may be populated with message items as long as the resulting encoded message data size of the object message to be generated does not exceed the maximum data size, especially it should be less than the maximum data size, because larger messages are more likely to be lost. The optimization step provides the generation rules for generating the object message using the message items. Especially for each message item an optimized generation period is determined during optimization. The optimized message generation period and the optimized data size are determined by this set of optimized generation periods and data sizes of the message items, e. g. analogous to the talent scheduling problem or the nursing scheduling problem.

In other words, the optimization step may determine how many and/or which message items an object message (=content of the object message) may comprise at a current object message generation event and how often an object message is generated (generation period of the object message).

Each object message is transmitted at the next transmission opportunity.

If the object message becomes larger, for example because many perceived objects/ regions/ message items are selected for transmission, it may be necessary to divide the message into object message segments before transmission. These object message segments are then transmitted consecutively.

An object message comprising at least some message items, having a fixed generation period, may be not transmittable if the data size of the object message, comprising all of the message items, having a fixed generation period, exceeds the given maximum data size. Then, the object message may be segmented into object message segments with reduced data sizes. In order to check if the object message should be segmented, the following steps may be carried out:

- Comparing the optimized data size of the object message with the given maximum data size.

- If the calculated or estimated data size of the object message, exceeds the given maximum data size:

  ▪ Segmentation of the object message into at least a first object message segment and a second object message segment.

These steps may be repeated until the criterion (=data size of the object message segment is less than the given maximum data size) is met. In other words, these steps can be repeated until the generated object message segments are transmittable.

The given maximum data size may be equal to the maximum data size provided by the communication management entity, and/ or may be smaller than the maximum data size, if further constraints apply, such as e.g. state of the channel (occupancy of the channel), fixed generation periods of individual object message segments (f. ex. if the perceived object is a playing child on the street, the object message segment comprising the child should be transmitted at the maximum possible frequency. Therefore, the frequency of said message item could be fixed during optimization and thus can be treated as a further limitation/ constraint in the optimization step. The optimized generation period of the related object message corresponds to the reciprocal value of the generation frequency.).

For example, the object message (segment) is a Collective Perception Message (CPM).

The "generation period" is the reciprocal value of the generation frequency. In other words, the generation period of the object message describes the time between transmissions of the object messages. In other words, if an object message is sent it takes the generation period until another object message will be transmitted for the next time.

The generation period and the data size are mutually dependent parameters: If the maximum data rate provided by the communication management entity does not allow transmitting all the object message payload (=message items) at the maximum frequency (=minimum generation period), the optimization step needs to make a trade off. Reducing the object message rate may be preferred in terms of payload efficiency (less transmitted message overhead). Reducing the object message size may be preferred in terms of latency. For example, if 20 perceived objects are selected for transmission whereby the data size of each perceived object is 50 Bytes, the object message overhead is 100 B and the channel upper bound is 2000B per second, there are at least two possibilities of transmitting these objects:

1. Object messages comprising 18 perceived objects are transmitted with an object message rate of 2 Hz:

$$2Hz \cdot (100\,B + 18 \cdot 50B) = 2000\frac{B}{s}$$

2. Object messages comprising 2 perceived objects are transmitted with an object message rate of 10 Hz:

$$10Hz \cdot (100\,B + 2 \cdot 50B) = 2000\frac{B}{s}$$

The first option allows for transmitting 36 perceived objects ( $2Hz \cdot 18 = 36\frac{Objects}{s}$ ) whereas the second option only transmits 20 perceived objects ( $10Hz \cdot 2 = 20\frac{Objects}{s}$ ) but allowing for a higher update rate.

A compromise should be found between these options depending on various criteria. The constraints of the optimization function comprise these criteria which may be used to systematically determine the optimized generation frequency and optimized data size of each associated object message segment. The optimized generation period and the optimized data size are the result of the step of optimization the optimization function considering constraints resulting from various sources.

In general, the relevancy weight of the message item depends on the content of the message item. The relevancy weight for the message item may depend at least on the relevancy value of the at least one perceived object or region included in the message item. Furthermore, the relevancy weight may depend on the confidence level of the perceived object or region.

The optimization function may be a compound latency, a cost function or a trainable function, for example. Especially the optimization function may be selected from one of the following functions:

- $L = \Sigma_i\, crit_i \cdot T_i$, whereby $crit_i$ is a time criticality, especially depending on or equal to the relevancy weight, and $T_i$ is the time between transmissions of the same object message segment $i$
- $L = \frac{\Sigma_i\, crit_i \cdot T_i}{P(\Sigma_i B_i)}$ , whereby $P$ is the probability of finding a suitable channel gap for the object message of size $\Sigma_i B_i$, where $B_i$ is the size of the object message segment $Bi$ if the object message segment $i$ is transmitted and 0 else. $P$ would correspond to the integral over the likelihood of a gap being larger than the calculated or estimated message size.

In the simplest case, optimizing the optimization function, especially a mathematical optimization of the optimization function, consists of maximizing or minimizing the optimization function by systematically choosing input values from within an allowed set (here the allowed set is at least limited by the maximum data rate and the payload/ maximum data size of the object message, whereby it may comprise further constraints, especially equalities or inequalities that the optimized generation period and the optimized data size have to satisfy) and computing the value of the optimization function.

For example, the constraints may depend at least on one of the following:

- the maximum data rate,
- the relevancy of the perceived objects, e.g. g there may be message items which should be sent with a fixed (high) generation frequency,
- channel feedback,
- message statistics,
- a type of the transmitting participant (f. ex. roadside unit, car, etc.),
- relevancy of the object message segments transmitted by other participants,
- a maximum time the optimization should take.

If the optimization provides more than one solution (multiple local extrema), the optimized generation period and the optimized data size may be one of the solutions provided in the optimization step. There may be a maximum time the optimization should take. In that case, the optimized generation period and the optimized data size may be the best solution, for example resulting in a minimum of the optimization function compared to the other solutions provided within the time limit.

According to an embodiment the object message is generated considering the optimized data size and it is transmitted with the optimized generation period via the communication network.

At the transmitting participant, the transmission of an object message is triggered by applications or by forwarding mechanisms. Once the message is generated and provided, the perception service may repeat the transmission, until the application requests the termination of the transmission, or trigger another request to provide updated messages. At the receiving participant, the message is processed by the services and the content of the message is delivered to applications or to other facilities layer entities. In one typical application, the message is transmitted by a roadside ITS-S and disseminated to a vehicle ITS-S within a target destination area, in which the information included in the message is considered as relevant to traffic participants.

According to an embodiment, the step providing the object message comprises the following steps:

- Segmentation of the object message into at least a first object message segment and a second object message segment if the optimized data size exceeds a given maximum data size,
- Providing the first object message segment with the optimized message generation period and the second object message segment with the optimized message generation period to be sent via the communication network.

Each object message segment is transmitted at the next transmission opportunity. Especially the object message segments may be sent in parallel using different channels of the communication network.

According to an embodiment, the relevancy weight is determined for each message item, based on at least one of the following information:

- Criticality of the perceived object (f. ex. high criticality for a pedestrian on the road, low criticality for an object which was already recently transmitted. Especially road users with specific emergency roles such as police cars or ambulances may also be attributed a high object criticality). The higher the object criticality (e.g., collision risk with another object), the higher the relevancy.
- Object type of the perceived object, both absolute and/or relative to other nearby objects (f. ex. pedestrian, other ITS-S, etc.). Vulnerable road users (e.g., pedestrian, cyclist) may have the highest relevancy.
- Object dynamics of the perceived object (f. ex. comprising parameters, such as speed, orientation, etc.). Especially, the more dynamic an object is, the higher its relevancy.
- Estimated knowledge of the other transmitting participants about the perceived object. Especially, if nearby stations are expected to already have knowledge of the current object status, the object relevancy may decrease.

An advantage is that the content of the message items is considered in the optimization step and a reliable provision of security-relevant data is made possible.

According to an embodiment, the communication network comprises at least a first channel and a second channel whereby each channel supports a specific maximum data rate, especially depending on a communication technology of the associated channel. In this embodiment the step of receiving or a maximum data rate for transmitting the object message, comprises receiving or estimating a first maximum data rate of the first channel and receiving or estimating a second maximum data rate of the second channel. Besides the method of the embodiment comprises the following steps:

- Assigning a first object message for transmission via the first channel and/or assigning a second object message for transmission via the second channel,
- Determining a first optimized message generation period and a first optimized data size of the first object message to be sent via the first channel and determining a second optimized message generation period and a second optimized data size of the second object message to be sent via the second channel considering the maximum data rate of the assigned channel,
- Providing the first object message with the first optimized message generation period and the first optimized data size and/or providing the second object message with the second optimized message generation period and the second optimized data size.

If the communication network comprises at least two channels and if the two channels are available for transmission, parts of the data, such as, for example, message items, comprising the omitted objects, can be offloaded to other channels. Especially, the participant may define at least a preferred channel (f. ex. the first channel) and an alternative channel (f. ex. the second channel). For each channel, the optimized generation periods and optimized data sizes may be determined as described above, considering the associated constraints, especially the associated maximum data rate, for each channel.

Multi-channel operation (MCO) functionalities may have interfaces to other facility services, such as f. ex. the collective perception service (CPS), other perception services and applications. Thus, the MCO functionalities may determine the information exchange requirements from sourcing applications to maintain an overview of the information exchange requirements of all sourcing application such it may be able to assign exchange capabilities to applications statically and/or dynamically.

The perception service, such as, for example, the CPS, may define its requirements and parameters which may either be static or dynamic, comprising preferred and alternative channels, object message priority in the preferred and alternative channels, number of resources (especially in units of bits/s) the perception service would like to consume in preferred and alternative channels, a saturation indication (i. e. what to do if an object message cannot be transmitted to the preferred or alternative channels, the object message could either be dropped or transmitted in any other channel), the validity time of the object message, an area of relevance of the object messages.

The perception service may override the parameters on a per message basis, especially if parameters should be adapted for the transmission of a specific object message. The parameters which may be overridden comprise preferred and alternative channels for this object message or object message segment, the priority of this object message (segment) in the preferred and alternative channels, the saturation indication, validity time of this object message (segment), the area of relevance of this object message (segment), additional protocol control information, such as, for example Basic Transport Protocol (BTP) port, GN type, GN security profile, etc.

Applications or perception services, such as for example the collective perception service, trigger the message generation in the message generating services and provide all messages including their communication requirements to the communication management entity to distribute the messages to the appropriate channels.

The communication management entity provides the upper bound of resources for each channel to the perception service such as, for example, the CPS: An upper bound of resources (especially in units of bits/s) that the perception service can use in its preferred and alternative channels (Bits measured at the facilities layer).

Furthermore, the communication management entity may send notifications to the perception service if the object message or object message segment could not be transmitted through the preferred channel.

Each channel will support a specific message size depending on the communication technology (LTE-V2X, ITS-G5, 5G V2X also known as NR-V2X, ...) among others.

The communication management entity may hand over an upper bound of resources for each channel, especially a maximum data rate for each channel, information about the last object message for transmission, especially if the last object message was transmitted on corresponding channels (f. ex. the provided information may comprise preferred channel/ alternative channel/ not transmitted) to the algorithm for generation period and data size management, especially the step of optimization.

According to an embodiment, a channel information, especially comprising information about channel occupancy patterns, of at least one channel of the communication network is received from the communication management entity and a constraining condition for the optimization is determined based on the received channel information to be considered when optimizing the optimization function.

Some knowledge about the precise state of the channel may affect the optimization. E.g., with a new input from the communication management entity offering information about the channel "gaps" (i. e. idle times = times where no messages are on the channel). E.g., if these are for example 500B, especially less than or equal to 400B, then the object messages or object message segments should not be larger than that. This would give a further constraint for the optimization. Additionally, or alternatively, a constraining condition for the optimization could for example define a message size threshold, e.g., by taking the 95% confidence interval for the message gap size if tracking the gap distribution.

According to an embodiment, the step of optimizing the optimization function comprises the following constraining condition:

- If the relevancy weights of the message items are all the same, the data size of the object message, comprising the first message item and the second message item is only reduced if at least one of the following conditions applies:

  ◦ The optimized message generation period of the object message is equal to the maximum threshold value of the message generation period,
  ◦ The data size divided by the optimized message generation period still exceeds the maximum data rate.

For example, if the list of perceived objects is homogeneous with respect to their relevancy values the message frequency should be reduced before reducing the data size of the associated object message segment. The data size will only be reduced if the message frequency is already at the lower limit (=maximum threshold value of the message generation period), especially 1Hz, and the upper resource bound is still violated. The reason is that it is preferable to send as many perceived objects as possible in this case.

An advantage of the embodiment is that it simplifies the optimization problem, because the number of parameters for optimization may be reduced. Therefore, the computing capacity and/ or the time until a result is provided may be reduced.

According to an embodiment, if the relevancy weight of the first message item exceeds the relevancy weight of the second message item, the data size of the object message is reduced if the reduction of data size allows for a higher message generation period of the first message item (in other words, if the relevancy weights of the message items are at least partially heterogeneous), the data size of the object message is reduced if the reduction of data size allows for a higher generation frequency of the message items with high relevancy weights.

The more heterogeneous in terms of relevancy the list of detected objects gets, the higher the difference in latency requirements gets. It may thus be preferrable to transmit at higher rates, including the more relevant perceived objects (message items) more often, even at the cost of reducing the data size (i.e., number of message items per object message). With very heterogeneous relevancies, e.g., a wrong way driver or a child in an urban scenario (very relevant) with lots of parked vehicles (not too relevant), it may be required to send at 10Hz about the relevant object while all parked cars are included only every 10 messages (1Hz on a per object level).

An advantage is that at least highly relevant perceived objects, such as for example pedestrians on the road, may be transmitted with a high frequency to prevent accidents in a traffic situation even if the data size of the object message, which is not segmented, exceeds the maximum transmittable data size.

According to an embodiment the method comprises the following steps:

- Evaluating of relevancy weight of a received message item,

- If the relevancy weight of the message item exceeds the relevancy weights of the message items selected for transmission,

  ○ the received maximum data rate is decreased by a politeness value, which remains unoccupied, especially allowing their use by other connected stations with potentially more relevant information to be shared

  ○ and the constraint in the step of optimizing the optimization function is adapted, accordingly.

In other words, the participant may transmit fewer data than allowed (lower frequency or lower object message size equivalent to reducing the number of message items for transmission) if it assesses that the relevancy weights of the message items transmitted by other participants is potentially higher than the own one. This way the channel is decongested by (politely) renouncing to the assigned resources. This leads to other participants receiving higher shares of the channel and potentially leading to better overall performances of the perception service, especially CPS.

Another aspect which may be included in the constraining condition is the type of the transmitting participant. If the station is required to transmit all perceived objects to comply with functional safety requirements it may prioritize message size over message frequency. In the embodiment the constraining condition allows participants of this profile to transmit all perceived objects. In this case the frequency may be lowered accordingly. Therefore, according to an embodiment the data size of the object message may be a fixed value in the step of optimizing the optimization value.

An advantage of the embodiment is that it simplifies the optimization problem, because the number of parameters for optimization may be reduced. Therefore, the computing capacity and/ or the time until a result is provided may be reduced.

The message statistics, in other words the statistics about the last transmitted and or received object messages may be used for providing the optimized generation periods and data sizes. Based on the feedback about the message statistics and potentially other environmental data, the algorithm may learn how to set the message generation period and data size:

- Ratio of messages received from all relevant traffic participants: reduce message generation frequency and data size when ratio increases as it can be assumed that the others then also receive our messages

- Ratio of messages received on preferred/alternative channel: The distribution of messages among the channels may give insights into the quality of service levels of each of them, impacting the decision. (In principle making the algorithm applicable to all channels)

- Traffic classes (=channel access priorities): The higher the traffic classes of the received messages, the more likely that the own messages will not get through the channel. This could be another factor of the overall compound latency.

According to an embodiment, at least some of the steps or all the for providing the optimized message generation period and the optimized data size of the object message are implemented by a trainable function, whereby the maximum data rate for transmitting the object message, the selected information and message statistics are provided to the trainable function for providing the optimized message generation period and the optimized data size of the object message whereby the message statistics comprise at least one of the following information:

- ratio, sizes and/or temporal distribution of received messages, especially all received messages,
- channel of the communication network used to transmit a preceding object message,
- ratio of messages, especially all messages, received on a preferred channel of the communication network to messages, especially all messages, received on an alternative channel of the communication network,
- ratio of object messages, especially all object messages, received on a preferred channel of the communication network to object messages, especially all object messages, received on an alternative channel of the communication network, and/or
- traffic classes of the received object messages,
- used modulation and coding schemes of the received messages,
- the channel load measured by other participants, communicated, e.g., by making use of the piggypacking mechanism supported by the GeoNetworking protocol of the ITS-G5 protocol stack.

The received messages may comprise object messages from other transmitting participants and/or messages other than object messages from other transmitting participants.

Especially the optimized generation period and the optimized data sizes are determined by a gaussian process or by a neural network.

The message statistics may not be limited to object messages. In general, everything on the channel is of interest, such as for example, the message length, transmission power, the multi-channel system, etc.. The message statistics may comprise at least some of the aforementioned information.

A further aspect of the invention is message generation device for carrying out the method for providing the object message comprising

- a communication module

  - for receiving information about the surrounding region,
  - for acquiring the selected information about the surrounding region, comprising perceived objects and/ or perceived regions, whereby the selected information are segmented into at least the first message item and the second message item,
  - for transmitting the selected information about the surrounding region, especially the message items, to an evaluation unit,

  - an ancilla module for receiving or estimating the maximum data rate from the communication management entity, and
  - the evaluation unit

  - for determining the first relevancy weight of the first message item, depending on a content of the first message item and for determining the second relevancy weight of the second message item, depending on a content of the second message item,
  - for defining the optimization function, at least depending on the first relevancy weight and the generation period of the first message item, and the second relevancy weight and the generation period of the second message item,
  - for optimizing the optimization function taking into account that the optimized data size divided by the optimized message generation period is less than or equal to the maximum data rate, to determine the optimized generation period and optimized data size of the object message,
  - for providing the object message with the optimized message generation period and the optimized data size to be sent via the communication network.

Advantages of the message generation device result directly from the advantages of the method for providing the object message.

The ancilla module may be either the communication module, the evaluation unit or a further module.

According to an embodiment, the communication module may, e.g., be implemented in a vehicle Communication and Control Unit (CCU), Onboard Unit (OBU) or Roadside Unit (RSU) providing wireless communication links.

According to an embodiment, the evaluation unit may e.g., be implemented in a vehicle control unit, an electronic control unit (ECU) or computation unit for automated driving (AD) or on a Roadside Unit (RSU).

According to an embodiment the message generation device comprises an object fusion system for evaluating the information about the surrounding region and for providing a list of perceived objects/ message items for the evaluation unit.

According to an embodiment the communication module is suitable for transferring the object message directly or indirectly via the communication network. In other words, the communication module is suitable for transferring the transmittable object message or object message segment directly from the transmitting participant to a receiving participant via the communication network, e.g., by ITS-G5 or C-V2X (via PC5 interface). Additionally or alternatively, the communication module is suitable for transferring the object message indirectly from the transmitting participant to a receiving participant via the communication network by providing the object message to other network nodes or other components using or forwarding the information to a connected device which provides the link to wireless or wired transmission technologies.

According to an embodiment, the evaluation unit is suitable for implementing a trainable function and/or whereby the evaluation unit comprises a neural network for carrying out at least one of the steps for providing the object message with the optimized generation period and the optimized data size to be sent via the communication network.

A further subject matter of the invention is a participant, especially a vehicle, motor vehicle, a VRU, a RSU, a Multi-connectivity Edge Computing (MEC) or a mobile network (cellular network), comprising the message generation device.

A further subject matter of the invention is a computer program product implementing the method for providing the object message as described above, preferably via a communication network. The computer program product comprises instructions, which cause the message generation device to carry out the steps of the method for providing the object message as described before.

A further subject matter of the invention is a computer-readable data carrier having stored thereon the aforementioned computer program product.

Further features, advantages and effects of the invention will become apparent by the description of preferred embodiments of the invention and the figures as attached. The figures show:

Figure 1 a flow chart of a method for providing an object message comprising information about a surrounding region of a participant in a communication network, according to an embodiment,
Figure 2 a schematic drawing of the content of an object message according to an embodiment,
Figure 3 a schematic drawing of the result of the optimization according to an embodiment, and
Figure 4 a schematic drawing of the result of the optimization according to an embodiment, and
Figure 5 a schematic drawing of multiple messages sent via a channel of a communication network according to an embodiment.

## Embodiments of the invention

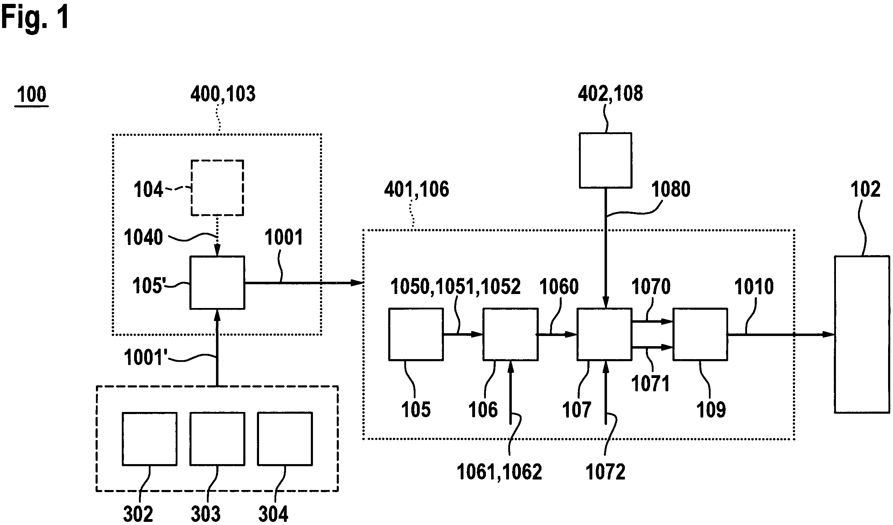

Fig. 1 depicts a flow chart of a method 100 for providing an object message 1010, comprising information 1001 about a surrounding region of a participant, in a communication network 102. The object message 1010 is provided 110 to be sent via the communication network 102.

The participant, especially a communication module 400 of the participant, receives all available information 1001' about a surrounding region of the participant from various sources, for example from

- a sensor (system) 302 of the participant,
- messages 303 from other transmitting participants, such as, for example messages others than object messages and/or object messages, collective perception messages (CPMs), collective awareness messages (CAMs),
- region-related information such as for example free space areas,
- further information 304 such as for example map data, a geometric description of the surrounding region perceived by the participant, etc..

The information may be segmented into message items. For example, each perceived object is segmented in a single message item. Alternatively, more than one object may be included in a message item.

The communication module 400 is responsible for acquiring 103 information 1001 about the surrounding region. The communication module 400 receives all available information 1001'. The communication module 400 may be an interface between the sensor system, other sending sources/ participants, providing all available information 1001' about the surrounding region, and an evaluation unit 401. The communication module 400 may also transmit the information, especially the message items, selectively to the evaluation unit 401, if necessary. Therefore, the communication module may process the received information 1001' in order to select 105' information 1001 about the surrounding region for transmission via the communication network 102 because it might be that not all available information 1001' are relevant for other participants.

The receiving participants may not need the raw sensor data of the sensor (system) if an object fusion system of the sensor (system) or of the communication module provides 104 and maintains a list 1040 of perceived objects that are currently perceived by the transmitting participant. A message item may comprise one or more objects of the list. In fig. 1 the object fusion system for providing 104 the list 1040 of perceived objects, especially for providing the message items, is part of the communication module 400. A message item with sufficient confidence level and not subject to redundancy mitigation techniques may be selected 105' for transmission as a result of the current object message generation event. The selection 105' for transmission may comprise further criteria, such as, for example, confidence of the object information, an object class, time of perception, etc.. Furthermore, message items may comprise sensor specifications or detected regions selected for transmission.

The selected information correspond to the acquired information 1001 about the surrounding region, which are segmented into message items, then.

The communication module 400 transmits the message items to the evaluation unit 401 for providing the object message 1010. The evaluation unit 401 is suitable to carry out the following steps:

- Determining 105 a relevancy weight 1051 of the first message item, and for determining 105 a relevancy weight 1052 of the second message item, especially based on at least one of the following information:

  • Object criticality of the perceived object (f. ex. high criticality for a pedestrian on the road, low criticality for an object which was already recently transmitted. Especially road users with specific emergency roles such as police cars or ambulances may also be attributed a high object criticality)
  • Object type of the perceived object (f. ex. pedestrian, other ITS-S, etc.)
  • Object dynamics of the perceived object (f. ex. comprising parameters, such as speed, orientation, etc.)
  • Estimated knowledge of the other transmitting participants about the perceived object.

- Defining 106 the optimization function 1060, at least depending on the relevancy weight 1051 and a generation period 1061 of the first message item, and the relevancy weight 1052 and a generation period 1062 of the second message item. The generation period of the message item describes how often said message item should be included into an object message.

- Optimizing 107 the optimization function 1060 taking into account at least one constraining condition (constraint) 1071, especially that the optimized data size divided by the optimized message generation period 1070 is less than or equal to the maximum data rate 1080 provided by an ancilla module 108, to determine the optimized generation period 1070 and optimized data size 1071 of the object message 1010. The ancilla module 402 is suitable for receiving 108 a maximum data rate 1080 for transmitting the object message from a communication management entity or estimating 108 the maximum data rate for transmitting the object message. The optimization may comprise further constraints 1072, especially equalities or inequalities that the optimized generation period and the optimized data size have to satisfy, such as e.g., state of the channel (occupancy of the channel), fixed generation periods of individual object message segments (f. ex. if the perceived object is a playing child on the street, the object message segment comprising the child should be transmitted at the maximum possible frequency.

- Providing 109, especially generating, the object message 1010 with the optimized message generation period 1070 and the optimized data size 1071 to be sent via the communication network.

The optimization step 107 of the method 100 for providing the object message 1010 may be similar to the nursing scheduling or talent scheduling problem. In the optimization step 107, some kind of a schedule for each message item may be determined, considering the constraints, especially the maximum data rate 1080 and the data sizes of the message items: the schedule shows the time steps in which the corresponding message is added to the object message 1010. Based on this schedule the optimized message generation period 1070 and the optimized data size 1071 may be determined, especially taking into account that the optimized data size divided by the optimized message generation period may be less than or equal to the maximum data rate..

Some of the steps or all of the steps for providing the optimized message generation period and the optimized data size of the object message 1010 may be implemented by a trainable function.

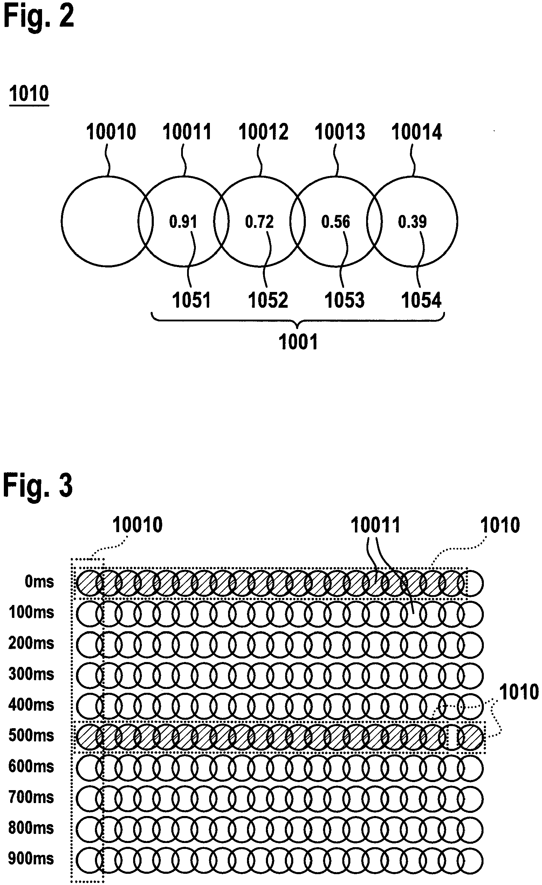

Figure 2 shows a schematic drawing of an object message 1010 according to an embodiment comprising a header 10010, that does not carry information concerning the surrounding region of the participant, but still consumes channel resources and the selected information 1001 segmented into four message items 10011, 10012, 10013, 10014. The relevancy weight 1051 of the first message item is 0.91, the relevancy weight 1052 of the second message item 10012 is 0.72, the relevancy weight 10014 of the fourth message item 10014 is 0.39. In other words, this is an example of message items 105 having heterogenous relevancy weights, whereby message items with higher relevancy values have been added first to the object message 1010. The object message 1010 may be provided by the method of fig. 1, for example. In this embodiment all of the components of the object message 1010 (header 10010, message items 10011, 10012, 10013, 10014) have equal size. But in general, they may have different sizes.

Figure 3 shows a schematic drawing of object messages 1010 generated at 0 ms and at 500 ms according to an embodiment. In this embodiment all of the components of the object message 1010 (header 10010, message items 10011) have equal size. The circles of the first column represent headers 10010 to be included in every generated object message 1010. The message items 1011 are also represented by circles. A filled circle represents a message item 1011 to be included in the object message 1010 at the associated time step. The unfilled circles are not included at the associated time step. The optimized message generation period 1070 of the object message 1010 is 500 ms, the message size (here in units of number of message items) for each time step is one header 10010 and nineteen message items 10011. At 0 ms the message item 1011 in the last column is not included, at 500 ms the second last message item is not included in the object message 1010. In the following section we describe how this result can be determined by solving the optimization problem considering the overall compound latency and the constraints:

For the sake of simplicity let's assume the communication management entity disposes of N=20 message items 1011, each comprising a part of the selected information 1001 for transmission. However, a maximum of M=40 message items can be transmitted in the next 1000 ms (=maximum data rate in units of number of equally sized message items per 1000 ms) based on channel feedback (e. g. MCO or others). Here, the problem to be solved is how often (=message generation period 1070) an object message 1010 is generated and how many and which message items 10011 are included in the message. The relevancy values of the message items are homogenous, in other words, each message item has the same relevancy value 1050 and the same size, here: relevancy value 1050 = 0.5 = constant. An overall compound latency is defined as:

$$L = \sum_i crit_i \cdot T_i,$$

whereby $crit_i$ is a time criticality, especially depending on or equal to the relevancy weight, and $T_i$ is the time between transmissions of the same object message segment $i$. In this embodiment the time criticality is equal to the relevancy value 1050 of the associated message item 10011. When minimizing the overall compound latency, the solution of the optimization is a set of $T_i$. In other words, the optimized generation period of every message item 1011 is determined. A local minimum of the optimization is: $T_i = 0.5$ $s$ $for$ $i = 1, 2, ... ,18$ and $T_i = 1$ $s$ $for$ $i = 19$ $and$ $i = 20$. Here, the optimized message generation period 1070 of the object message 1010 may be determined by determining the minimum of all $T_i$, here the optimized message generation period 1070 is 500 ms and the optimized data size 1071 is 19 message items 10011 per object message 1010. Here we also achieve the highest throughput $\tau$ under the given channel constraints as data size of the object message 1010 is favored over message frequency, reducing the required message overhead. $\tau_{max} = 38\frac{seg}{s}$.

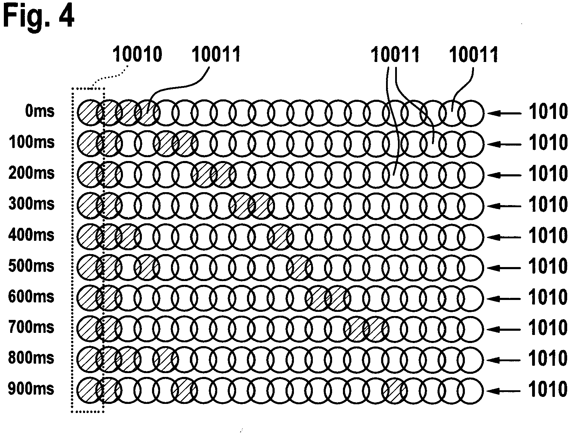

Figure 4 shows a schematic drawing of the solution of the optimization step. In this embodiment, object messages 1010 are generated with an optimized message generation period 1070 of 100ms. In this embodiment all of the components of the object message 1010 (header 10010, message items 10011) have equal size. For the sake of simplicity let's assume the communication management entity disposes of N=20 message items 1011, each comprising a part of the selected information 1001 for transmission. However, a maximum of M=40 message items can be transmitted in the next 1000 ms (=maximum data rate in units of number of equally sized message items per 1000 ms) based on channel feedback (e. g. MCO or others). Here, the problem to be solved is how often (=message generation period) an object message 1010 is generated and how many and which message items 10011 are included in the message. The relevancy weights of the message items 1011 are heterogeneous. In this embodiment they decrease from left to right: $crit_i \geq crit_j \ \forall \ i < j.$

Optimizing again for the overall compound latency a new transmission strategy compared to the transmission strategy depicted in figure 3 achieves the best results. Here, each generated object message 1010 comprises a header 10010 and three equally sized message items 10011. While the shown pattern minimizes the compound latency, the throughput sinks to $\tau = 30 \frac{seg}{s}$ . However, as the time-criticality of the first message item in the row is extremely high, resulting in a short generation period $T_1 = 0.1 \ s$), this justifies the loss of net data rate. The less important message items may not be transmitted (here message items with i= 17, 18, 19, 20) or be included only occasionally (here: message items with i=2, 3, 4, 5, 6, 7, 8, 9, 10, 11, 12, 13, 14, 15, 16). In this embodiment, the optimized generation period 1070of the object message 1010 may be determined by determining the minimum of all $T_i$, here the optimized message generation period 1070 is equal to $T_i = 0.1 \ s$ and the optimized data size 1071 is three message items 10011 per object message 1010. This solution takes into account all of the constraints.

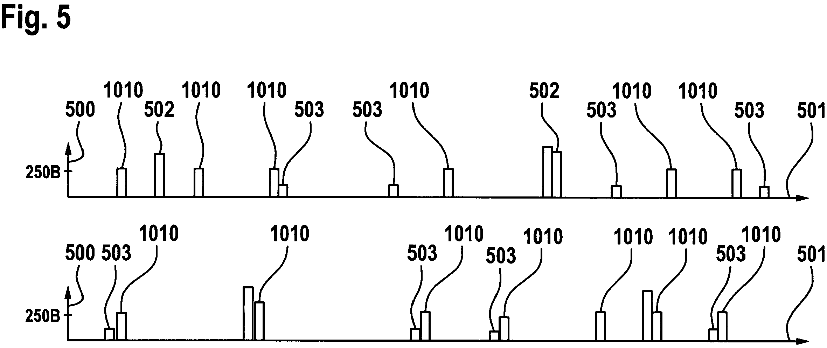

According to the embodiment shown in figure 5, different messages, especially object messages 1010 and other messages, such as for example CAMs 503 and Decentralized Environmental Notification Messages (DENM), may be put to the wireless channel of a communication network 102 by two participants. The x-axis represents time and the y-axis represents data size in Byte. The time resolution is only for visualization purposes. Also, all messages are put to the same channel, the differentiation is only to attribute them to the respective transmitters. Now the optimization algorithm 107 could for example define a message size threshold, e.g., by taking the 95% confidence interval for the gap size if tracking the gap distribution. A more sophisticated method 100 extending the relevancy weight-based method 100 as depicted in figure 1 could be obtained by minimizing:

$$L = \frac{\sum_i crit_i \cdot T_i}{P(\sum_i B_i)}$$

whereby $P$ is the probability of finding a suitable channel gap for the object message of size $\Sigma_i B_i$, where $B_i$ is the size of the object message segment $Bi$ if the object message segment $i$ is transmitted and 0 else. $P$ would correspond to the integral over the likelihood of a gap being larger than the calculated or estimated message size.

## Claims

1. Method (100) for providing an object message (1010), comprising selected information (1001) about a surrounding region of a participant, in a communication network (102) comprising the following steps:

   • acquiring (103) the selected information (1001) about the surrounding region, comprising perceived objects and/or perceived regions, whereby the selected information (1001) are segmented into at least a first message item (10011, 10012, 10013, 10014) and a second message item (10011, 10012, 10013, 10014)
   • Receiving (108) a maximum data rate (1080) for transmitting the object message (1010) from a communication management entity or estimating (1108) the maximum data rate (1080) for transmitting the object message (1010),
   • Determining an optimized data size (1071) and an optimized message generation period (1072) of the object message (1010) by carrying out the following steps:

     ▪ Determining (105) a first relevancy weight (1050, 1051, 1052, 1053, 1054) for the first message item (10011, 10012, 10013, 10014), depending on a content of the first message item (10011, 10012, 10013, 10014) and determining a second relevancy weight (1050, 1051, 1052, 1053, 1054) for the second message item (10011, 10012, 10013, 10014), depending on a content of the second message item (10011, 10012, 10013, 10014),
     ▪ Defining (106) an optimization function (1060), at least depending on

       ∘ the first relevancy weight (1050, 1051, 1052, 1053, 1054) and a generation period of the first message item (10011, 10012, 10013, 10014), and
       ∘ the second relevancy weight (1050, 1051, 1052, 1053, 1054) and a generation period of the second message item (10011, 10012, 10013, 10014),

■ Optimizing (107) the optimization function (1060) taking into account that the optimized data size (1071) divided by the optimized message generation period (1070) is less than or equal to the maximum data rate (1080), to determine the optimized message generation period (1070) and optimized data size (1071) of the object message (1010),

• Providing (109) the object message (1010) with the optimized message generation period (1070) and the optimized data size (1071) to be sent via the communication network (102).

2. Method (100) according to claim 1, whereby the method (100) comprises a step of sending the object message (1010) via the communication network (102).

3. Method (100) according to one of the preceding claims, whereby the step providing (109) the object message (1010) comprises the following steps:

• Segmentation of the object message (1010) into at least a first object message segment and a second object message segment if the optimized data size exceeds a transmittable data size,
• Providing (109) the first object message segment with the optimized message generation period (1070) and the second object message segment with the optimized message generation period (1070) to be sent via the communication network (102).

4. Method (100) according to one of the preceding claims, whereby the relevancy weight (1050, 1051, 1052, 1053, 1054) is determined for each message item (10011, 10012, 10013, 10014), based on at least one of the following information:

■ Object criticality of the perceived object and/or region criticality of the perceived region
■ Object type of the perceived object and/or region type of the perceived region
■ Object dynamics of the perceived object
■ Estimated knowledge of the other transmitting participants about the perceived object and/or perceived region.

5. Method (100) according to one of the preceding claims, whereby

■ the communication network (102) comprises at least a first channel and a second channel, whereby each channel supports a specific maximum data rate, especially depending on a communication technology,
■ the step of receiving (108) or estimating (108) a maximum data rate (1080) for transmitting the object message (1010), comprises receiving or estimating a first maximum data rate of the first channel and receiving or estimating a second maximum data rate of the second channel,
■ and whereby the method (100) comprises the following steps:

• Assigning a first object message for transmission via the first channel and/or assigning a second object message for transmission via the second channel,
• Determining a first optimized message generation period and a first optimized data size of the first object message to be sent via the first channel and determining a second optimized message generation period and a second optimized data size of the second object message to be sent via the second channel considering the maximum data rate of the assigned channel,
• Providing (109) the first object message with the first optimized message generation period and the first optimized data size and/or providing the second object message with the second optimized message generation period and the second optimized data size.

6. Method (100) according to claim 5, whereby the first object message and/or the second object message are sent via the assigned channel of the communication network (102).

7. Method (100) according to one of the preceding claims, whereby the method (100) comprises the following steps:

■ Receiving a channel information, especially comprising information about channel occupancy patterns, of at least one channel of the communication network (102) from the communication management entity,
■ Determining a constraining condition based on the received channel information to be considered when optimizing (107) the optimization function (1060).

8. Method (100) according to one of the preceding claims, whereby the step of optimizing (107) the optimization function (1060) comprises the following constraining condition:

■ If the relevancy weights (1050, 1051, 1052, 1053, 1054) of the message items (10011, 10012, 10013, 10014) are all the same, the data size of the object message (1010), comprising the first message item (10011, 10012, 10013, 10014) and the second message item (10011, 10012, 10013, 10014) is only reduced if at least one of the following conditions applies:

• The optimized message generation period (1070) of the object message (1010) is equal to a maximum threshold value of the message generation period,
• The data size divided by the optimized message generation (1070) period still exceeds the maximum data rate.

9. Method (100) according to one of the preceding claims, whereby the step of optimizing (107) the optimization function (1060) comprises the following constraining condition:

■ If the relevancy weight (1050, 1051, 1052, 1053, 1054) of the first message item (10011, 10012, 10013, 10014) exceeds the relevancy weight (1050, 1051, 1052, 1053, 1054) of the second message item (10011, 10012, 10013, 10014), the data size of the object message (1010) is reduced if the reduction of data size allows for a higher message generation period of the first message item (10011, 10012, 10013, 10014.

10. Method (100) according to one of the preceding claims, whereby method (100) comprises the steps:

■ Evaluating of relevancy weight of a received message item,
■ If the relevancy weight (1050, 1051, 1052, 1053, 1054) of the received message item (10011, 10012, 10013, 10014) exceeds the relevancy weights (1050, 1051, 1052, 1053, 1054) of the message item (10011, 10012, 10013, 10014) to be transmitted,

• the received maximum data rate is decreased by a politeness value
• and the constraint in the step of optimizing (107) the optimization function (1060) is adapted, accordingly.

11. Method (100) according to one of the preceding claims, whereby at least some of the steps or all of the steps for providing the optimized message generation period (1070) and the optimized data size (1071) of the object message (1010) are implemented by a trainable function, whereby the maximum data rate (1080) for transmitting the object message (1010), the selected information (1001) and message statistics are provided to the trainable function for providing the optimized message generation period and the optimized data size of the object message (1010) whereby the message statistics comprise at least one of the following information:

■ ratio, sizes and/or temporal distribution of received messages, especially all received messages,
■ channel of the communication network used to transmit a preceding object message (1010),
■ ratio of messages, especially all messages, received on a preferred channel of the communication network, to messages, especially all messages, received on an alternative channel of the communication network (102),
■ ratio of object messages (1010), especially all object messages (1010), received on a preferred channel of the communication network to object messages (1010), especially all object messages (1010), received on an alternative channel of the communication network (102),
■ traffic classes of the received object messages,
■ used modulation and coding schemes of the received messages, and/or
■ the channel load measured by other participants.

12. Message generation device for carrying out the method (100) of one of the preceding claims comprising

■ a communication module (400)

• for receiving information (1001') about the surrounding region,
• for acquiring (103) the selected information (1001) about the surrounding region, comprising perceived objects and/ or perceived regions, whereby the selected information (1001) are segmented into at least the first message item (10011, 10012, 10013, 10014) and the second message item (10011, 10012, 10013, 10014),
• for transmitting the selected information (1001) about the surrounding region, especially the message items (10011, 10012, 10013, 10014), to an evaluation unit (401),

■ an ancilla module (402) for receiving (108) or estimating (108) the maximum data rate (1080) from the communication management entity, and
■ the evaluation unit (401)

• for determining (105) the first relevancy weight (1050, 1051, 1052, 1053, 1054) of the first message item (10011, 10012, 10013, 10014), depending on a content of the first message item (10011, 10012, 10013, 10014) and for determining second the relevancy weight (1050, 1051, 1052, 1053, 1054) of the second message item (10011, 10012, 10013, 10014), depending on a content of the second message item (10011, 10012, 10013, 10014),

• for defining (106) the optimization function (1060), at least depending on the first relevancy weight (1050, 1051, 1052, 1053, 1054) and the generation period of the first message item (10011, 10012, 10013, 10014), and the second relevancy weight (1050, 1051, 1052, 1053, 1054) and the generation period of the second message item (10011, 10012, 10013, 10014),

• for optimizing (107) the optimization function (1060) taking into account that the optimized data size (1071) divided by the optimized message generation period (1070) is less than or equal to the maximum data rate (1080), to determine the optimized generation period (1070) and optimized data size (1071) of the object message (1010),

• for providing (109) the object message (1010) with the optimized message generation period (1070) and the optimized data size (1071) to be sent via the communication network (102).

13. Message generation device according to claim 12, whereby the evaluation unit (401) is suitable for implementing a trainable function and/or whereby the evaluation unit comprises a neural network for carrying out at least one of the steps for providing the object message (1010) with the optimized generation period (1070) and the optimized data size (1071) to be sent via the communication network (102).

14. Participant comprising a message generation device according to one of the claims 12 or 13.

15. A computer program product comprising instructions, which cause the message generation device one of the claims 12 or 13 to carry out the steps of the method (100) of one of the claims 1 to 12.

16. A computer-readable data carrier having stored thereon the computer program product of claim 15.

# Fig. 1

EP 4 366 340 A1

# Fig. 2

_1010_

10010   10011   10012   10013   10014

0.91    0.72    0.56    0.39

1051    1052    1053    1054

1001

# Fig. 3

10010                          10011        1010

0ms
100ms
200ms
300ms
400ms                                            1010
500ms
600ms
700ms
800ms
900ms

# Fig. 4

Fig. 5

Europäisches
Patentamt

European
Patent Office

Office européen
des brevets

# EUROPEAN SEARCH REPORT

Application Number

EP 22 20 5083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/332350 A1 (JHA SATISH C [US] ET AL) 20 October 2022 (2022-10-20) | 1-9, 11-16 | INV. H04W4/40 |
| A | * paragraphs [0071], [0156] – [0158], [0176] – [0190] * | 10 | |
| A | KR 2022 0098176 A (BOSCH GMBH ROBERT [DE]) 11 July 2022 (2022-07-11) * paragraphs [0009], [0025], [0029], [0031], [0034], [0035], [0041] * | 1-16 | |

TECHNICAL FIELDS
SEARCHED       (IPC)

H04W

The present search report has been drawn up for all claims

| Place of search | Date of completion of the search | Examiner |
|---|---|---|
| The Hague | 14 April 2023 | Blanco Cardona, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 5083

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2023

| Patent document cited in search report | | Publication date | Patent family member(s) | | Publication date |
|---|---|---|---|---|---|
| US 2022332350 | A1 | 20-10-2022 | CN | 114514758 A | 17-05-2022 |
| | | | EP | 4055803 A1 | 14-09-2022 |
| | | | US | 2022332350 A1 | 20-10-2022 |
| | | | WO | 2021092039 A1 | 14-05-2021 |
| KR 20220098176 | A | 11-07-2022 | CN | 114642022 A | 17-06-2022 |
| | | | DE | 102019216916 A1 | 06-05-2021 |
| | | | EP | 4055848 A1 | 14-09-2022 |
| | | | JP | 2023500881 A | 11-01-2023 |
| | | | KR | 20220098176 A | 11-07-2022 |
| | | | US | 2022386169 A1 | 01-12-2022 |
| | | | WO | 2021089237 A1 | 14-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102019218916 A1